# EUROPÄISCHE PATENTSCHRIFT

(11) **EP 1 911 672 B1**
(45) Veröffentlichungstag und Bekanntmachung des Hinweises auf die Patenterteilung: **21.11.2018**
(21) Anmeldenummer: 07017281.2
(22) Anmeldetag: 04.09.2007
(51) Int. Cl.: B63G 8/36, B63G 8/10

(54) **Unterseeboot mit einer CO2-Bindeeinrichtung**
Submarine with a CO2 bonding device
Sous-marin doté d'un dispositif de bandage CO2

(30) Priorität: 14.10.2006 DE 102006048716
(43) Veröffentlichungstag der Anmeldung: 16.04.2008
(73) Patentinhaber: ThyssenKrupp Marine Systems GmbH, 24143 Kiel (DE)
(72) Erfinder: Angenendt, Hartmut, Dipl.-Ing., 23627 Gross Grönau (DE)
(74) Vertreter: thyssenkrupp Intellectual Property GmbH

(56) Entgegenhaltungen:
- DE-C1- 19 830 470
- US-A- 3 404 529

## Beschreibung

Die Erfindung betrifft ein Unterseeboot mit einer CO2-Bindeeinrichtung zum Binden des in der Luft im Inneren des Unterseebootes enthaltenen CO2.

Bei Unterseebooten ist es erforderlich, im getauchten Zustand aus der Innen- bzw. Atemluft das dort enthaltene CO2 zu binden. Das CO2 fällt insbesondere in der Ausatemluft der Mannschaft an. Diese Bindung erfolgt heutzutage meist durch Atemkalk oder Lithiumhydroxid. Atemkalk hat den Nachteil, dass große Mengen von Atemkalk im Unterseeboot mitgeführt werden müssen, um auch bei längeren Missionen eine CO2-Bindung gewährleisten zu können. Lithiumhydroxid nimmt zwar bei gleichen CO2-Bindeeigenschaften ein geringeres Volumen ein als Atemkalk, hat jedoch den Nachteil, dass es deutlich teurer ist. Ferner sind reversible CO2-Bindeeinrichtungen bekannt, bei welchen das gebundene CO2 durch Zufuhr von Wärmeenergie wieder gelöst werden kann. Die erforderliche Wärmeenergie wird in den meisten Fällen durch Umwandlung elektrischer Energie gewonnen, die im getauchten Zustand des Bootes bereitgestellt werden muss. Bei nicht nuklear angetriebenen Unterseebooten ist dieses Verfahren bedingt nachteilig, da die elektrische Energie entweder durch Batterien oder durch die außenluftunabhängige Antriebsanlage, d. h. Brennstoffzellenanlage oder ähnliche, sofern vorhanden, bereitgestellt werden muss. Das heißt, hier wird entweder eine zusätzliche Batteriekapazität für die Regenerierung der CO2-Bindeeinrichtung benötigt, was größere Batterieanordnungen mit dem entsprechenden Platzbedarf erfordert, oder es werden zusätzliche Brennstoff- und Sauerstoffvorräte benötigt, was zur Vergrößerung der entsprechenden Speicher- bzw. Tank-Kapazität führt.

Die DE 198 30 470 C1 beschäftigt sich mit einem Verfahren zur Adsorption von metabolisch produziertem Kohlendioxid. Als Anwendungsbereiche werden bemannte geschlossene oder teilgeschlossene Räume genannt, in denen sich die Atmosphäre mit metabolisch produzierten Schadstoffen anreichert, insbesondere mit durch Atmung kontinuierlich produziertem Kohlendioxid. Als Anwendung der Kohlendioxidbindung in Lebenserhaltungssystemen werden beispielsweise Raumfahrzeuge, Flugzeuge oder Unterseeboote genannt. Es wird ein Ionenaustauscherharz zur Kohlendioxidbindung vorgesehen, das der kohlendioxidhaltigen Atemluft ausgesetzt wird. Die JP 63-252528 offenbart ein Unterseeboot nach dem Oberbegriff des Anspruchs 1.

Im Hinblick auf diesen Stand der Technik ist es Aufgabe der Erfindung, ein Unterseeboot mit einer verbesserten regenerativen CO2-Bindeeinrichtung bereitzustellen, welche eine kostengünstige CO2 Bindung im Unterseeboot ermöglicht und darüber hinaus einen geringeren Platzbedarf erfordert.

Diese Aufgabe wird durch ein Unterseeboot mit den in Anspruch 1 angegebenen Merkmalen gelöst. Bevorzugte Ausführungsformen ergeben sich aus den Unteransprüchen.

Bei dem erfindungsgemäßen Unterseeboot ist die regenerative CO2-Bindeeinrichtung vorzugsweise derart ausgestaltet, dass das Batterievolumen, das Speichervolumen und/oder das Tankvolumen für die zusätzliche Energiebereitstellung geringer ist als das Volumen für die Bevorratung von Lithiumhydroxid unter der Voraussetzung gleicher Absorptionsleistung beider Systeme, und dass die Betriebskosten geringer sind als die einer Anlage unter Verwendung von Atemkalk. Eine solche Anlage ist somit sowohl im Hinblick auf den Raumbedarf als auch im Hinblick auf die Betriebskosten optimiert.

Erfindungsgemäß ist eine CO2-Bindeeinrichtung zum Binden des in der Luft, insbesondere der Atemluft im Inneren des Unterseebootes enthaltenen CO2 vorgesehen. Diese CO2-Bindeeinrichtung weist ein CO2-Bindemittel auf, welches regenerierbar ist, d. h. es handelt sich um eine regenerative CO2-Bindeeinerichtung. Die Regeneration des CO2-Bindemittels erfolgt dabei durch Zuführung von Wasserdampf, wobei durch den Wasserdampf das CO2 aus dem CO2-Bindemittel gelöst und aus der CO2-Bindeeinrichtung ausgetragen wird und dann aus dem Unterseeboot abgeleitet werden kann. Derartige CO2-Bindemittel sind
am Markt verfügbar. Diese regenerative CO₂-Bindeeinrichtung hat den Vorteil, dass deutlich geringere Mengen an CO₂-Bindemittel mitgeführt werden müssen, als es beispielsweise bei Atemkalk oder Lithiumhydroxid erforderlich wären. Die Anlage ist so ausgebildet, dass das CO₂-Bindemittel sobald es eine bestimmte Sättigung erreicht hat, wieder regeneriert wird und anschließend wieder erneut CO₂ aufnehmen kann. Das heißt, das CO₂-Bindemittel wird mehrfach genutzt. Vorzugsweise sind in dem Unterseeboot mehr als eine CO₂-Bindeeinrichtung vorgesehen, so dass während der Regenerationsphase einer CO₂-Bindeeinrichtung zumindest eine zweite CO₂-Bindeeinrichtung in Betrieb sein kann, um CO₂ aus der Atemluft zu entfernen.

Erfindungsgemäß erfolgt die Regeneration des CO₂-Bindemittels durch Zufuhr von Wasserdampf. Hierzu ist in dem Unterseeboot ein Dampferzeuger vorgesehen, welcher den erforderlichen Wasserdampf erzeugt und der CO₂-Bindeeinrichtung zuführt, so dass der Wasserdampf das CO₂-Bindemittel durchspülen kann. Erfindungsgemäß ist der Dampferzeuger dabei so ausgebildet, dass in ihm direkt Wasserstoff mit Sauerstoff verbrannt wird, um die erforderliche Wärmeenergie bereitzustellen. Diese Verbrennung kann katalytisch oder in einem offenen Brenner erfolgen. Die direkte Verbrennung von Wasserstoff und Sauerstoff hat den Vorteil, dass ein sehr hoher Wirkungsgrad erreicht werden kann, welcher größer ist als bei Erwärmung mittels elektrischer Energie, welche in Batterien zwischengespeichert ist und zuvor durch einen Generator erzeugt wurde. Insbesondere führt die direkte Verbrennung von Wasserstoff mit Sauerstoff dann zu einem Gewinn an Wirkungsgrad, wenn der Energiebedarf des getauchten Bootes von einer Brennstoffzelle gedeckt wird, die Wasserstoff und Sauerstoff in elektrische Energie umwandelt. In diesem Fall werden bei direkter Verbrennung gegenüber Dampferzeugung mittels elektrischer Energie die sich im Wirkungsgrad der Brennstoffzelle manifestierenden Verluste vermieden. Vorzugsweise sind der Dampferzeuger und die CO₂-Bindeeinrichtung derart ausgebildet, dass der bei der Verbrennung von Wasserstoff mit Sauerstoff gebildete Wasserdampf der CO₂-Bindeeinrichtung zu deren Regeneration zuführbar ist. Diese Anordnung nutzt einen weiteren Vorteil der Verbrennung von Wasserstoff und Sauerstoff, nämlich denjenigen, dass bei der Verbrennung von Wasserstoff und Sauerstoff direkt Wasserdampf anfällt, welcher zur Regeneration des CO₂-Bindemittels erforderlich ist. Dies ermöglicht einen sehr einfachen Aufbau der Anlage und darüber hinaus einen hohen energetischen Wirkungsgrad.

Besonders bevorzugt ist das Unterseeboot mit einer Brennstoffzellenanlage ausgerüstet. Die beschriebene CO₂-Bindeeinrichtung mit dem beschriebenen Dampferzeuger eignet sich insbesondere zum Einsatz auf einem derartigen Unterseeboot. Auf Unterseebooten mit Brennstoffzellenanlagen stehen die beiden Reaktanden Sauerstoff und Wasserstoff ohnehin für den Betrieb der Brennstoffzelle zur Verfügung, so dass hier zum Betrieb des Dampferzeugers keine zusätzlichen Komponenten sondern lediglich eine geringfügige Erweiterung der Einrichtungen zur Speicherung von Wasserstoff und Sauerstoff erforderlich sind, da diese Stoffe ohnehin auf dem Unterseeboot vorhanden sind. Es ist auch möglich, den Wasserstoff aus fossilen Energieträgern durch Reformierung an Bord des Unterseebootes zu gewinnen.

Weiter bevorzugt ist in dem Dampferzeuger eine Verdampfereinrichtung vorgesehen, in welcher Wasser mittels der durch Verbrennung von Wasserstoff und Sauerstoff erzeugten Wärme verdampft wird. Vorzugsweise ist hierzu eine Befeuchtereinrichtung vorgesehen, über welche definierte Wassermengen zugeführt und dann durch die bei der Verbrennung angefallene Wärme verdampft werden. Diese Verdampfereinrichtung kann entweder den gesamten zur Regeneration des CO₂-Bindemittels erforderlichen Wasserdampf bereitstellen oder aber zusätzlichen Wasserdampf zu dem bei der Verbrennung von Wasserstoff und Sauerstoff anfallenden Wasserdampf bereitstellen.

Das CO₂-Bindemittel ist vorzugsweise ein Festamin bzw. ein festes Amin. Derartige Festamine (solid amine) zur CO₂-Absorption sind aus dem Bereich der Raumfahrt bekannt. Bei diesen Festaminen sind Amine an ein festes Substrat, beispielsweise an ein Copolymersubstrat gebunden. Zur CO₂-Bindung können verschiedene Amine, beispielsweise aus dem Bereich zwischen Mono-Ethanolamin und Tri-Ethanolamin Verwendung finden. Festamin weist hohe CO₂-Bindeeigenschaften auf, durch welche bei getauchtem Unterseeboot der CO₂-Gehalt in der Atemluft auf einen gewünschten Sollwert gesenkt werden kann. Ferner lässt sich das Festamin durch Zuführen von Wasserdampf, welcher das CO₂ aus dem Festamin löst und austrägt, regenerieren.

Das mit Hilfe des Wasserdampfes aus dem CO₂-Bindemittel gelöste CO₂ kann auf verschiedene Weise gespeichert oder aus dem Unterseeboot nach außen abgeführt werden. Beispielsweise kann das CO₂ verdichtet und in Druckspeichern gespeichert werden und dann bei Überwasserfahrt wieder nach außen abgegeben werden. Ferner ist es auch möglich das CO₂ in Wasser gelöst in das umgebende Seewasser abzuleiten.

Stoffe, die CO₂ binden können, sind auch geeignet, andere säurebildende Gase zu binden. Für die regenerative CO₂-Bindeeinrichtung gilt also, dass an die Stelle von CO₂ ganz oder teilweise andere säurebildende Gase treten können. In einer vorteilhaften Ausführung kann das CO₂-Bindemittel durch zweckmäßige Beimischungen so modifiziert sein, dass zusätzlich vorbestimmte gasförmige Schadstoffe gebunden und abgeführt werden können, die nicht zu der Gruppe der säurebildenden Gase gehören.

Nachfolgend wird die Erfindung beispielhaft anhand der beigefügten Zeichnungen beschrieben. In diesen zeigt:
- Fig. 1 und Fig. 2: in einem Blockschaltbild die prinzipielle Funktion einer CO₂-Bindeeinrichtung gemäß der Erfindung und
- Fig. 3: ein Blockschaltbild eines Dampferzeugers für eine CO₂-Bindeeinrichtung gemäß der Erfindung.

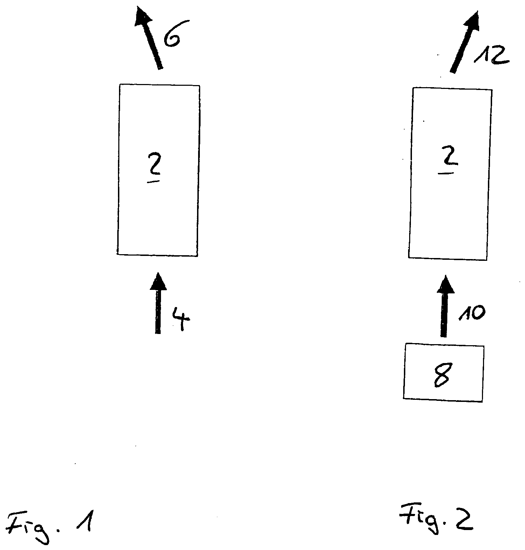

Fig. 1 zeigt die CO₂₋Bindeeinrichtung des Unterseebootes in einer Betriebsphase und Fig. 2 zeigt die CO₂-Bindeeinrichtung eines Unterseebootes in der Regenerationsphase. Die CO₂-Bindeeinrichtung weist einen Filter 2 auf, welcher ein CO₂-Bindemittel, beispielsweise ein Festamin enthält. In der in Fig. 1 gezeigten Adsorptionsphase wird dem Filter 2 ein belasteter Luftstrom 4 zugeführt, welcher einen zu hohen CO₂-Anteil enthält. Das CO₂ wird in dem Filter 2 aufgenommen und in dem Festamin gebunden. Aus dem Filter 2 tritt dann ein gereinigter Luftstrom 6 aus, welcher dem Belüftungssystem des Unterseebootes wieder zugeführt und gegebenenfalls mit Sauerstoff angereichert werden kann. In dem gereinigten Luftstrom ist der CO₂-Gehalt unter einen gewünschten Grenzwert gesenkt worden.

Die Adsorption wie sie anhand von Fig. 1 erläutert wurde, erfolgt solange, bis ein bestimmter Sättigungsgrad des Filters 2 erreicht ist. Dann folgt eine Regenerations- bzw. Desorptionsphase, welche in Fig. 2 dargestellt ist. In dieser wird von einem Dampferzeuger 8 Wasserdampf 10 erzeugt, welcher in den Filter 2 bzw. durch den Filter 2 geleitet wird. Der Wasserdampf löst das im Filter 2 gebundene CO₂, so dass aus dem Filter in der Desorptionsphase ein CO₂-Strom 12 austritt, welcher beispielsweise einem Sammelsystem oder ähnlichem zugeführt und/oder aus dem Unterseeboot ausgeleitet werden kann.

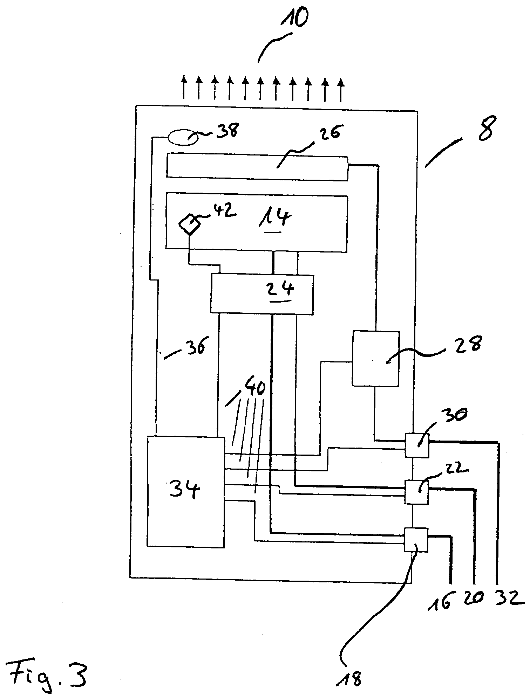

Anhand vom Fig. 3 wird nun der prinzipielle Aufbau und die prinzipielle Funktionsweise des Dampferzeugers 8 erläutert. Wie oben beschrieben, liegt der erfindungswesentliche Gedanke darin, die zum Erzeugen des Wasserdampfes erforderliche Wärmeenergie durch direkte Verbrennung von Wasserstoff und Sauerstoff bereitzustellen. Dazu weist der Dampferzeuger 8 eine Brennkammer bzw. einen Brenner 14 auf, in welchem der Wasserstoff mit dem Sauerstoff verbrannt wird. Der dabei freiwerdende Wasserdampf 10 tritt dann aus dem Dampferzeuger 8 aus und wird dem Filter 2 zugeführt, um diesen zu regenerieren.

Dem Brenner 14 wird der Wasserstoff aus einem Wasserstoffspeicher über eine Wasserstoffleitung 16 und ein Wasserstoffregelventil 18 zugeführt. Der Sauerstoff wird entsprechend über eine Sauerstoffleitung 20 aus einem Sauerstofftank und über ein Sauerstoffregelventil 22 zugeführt. Dabei ist dem Brenner 14 eine Sicherheitseinrichtung 24 vorgeschaltet, durch welche Sauerstoff und Wasserstoff dem Brenner 14 zugeführt werden.

Darüber hinaus ist dem Brenner 14 nachgeschaltet eine Befeuchtungseinrichtung 26 angeordnet, über welche zusätzliches Wasser durch die von dem Brenner 14 erzeugte Wärme verdampft und dem Wasserdampfstrom 10 zugeführt werden kann. Der Befeuchtungseinrichtung 26 wird Wasser über eine optional angeordnete Pumpe 28 zugeführt. Dabei ist die Pumpe 28 über ein Wasserventil 30 mit einer Wasserleitung 32 zur Wasserzufuhr verbunden. Die Befeuchtungseinrichtung 26 mit den zugehörigen Komponenten ist optional vorgesehen.

Der gesamte Dampferzeugungsprozess wird von einer Steuereinrichtung 34 gesteuert bzw. geregelt. Dazu ist die Steuereinrichtung 34 über eine Sensorleitung 36 mit einem Sensor 38 verbunden, welcher in dem Wasserdampfstrom 10 gelegen ist und über welchen die Dampfmenge und/oder Temperatur erfasst wird. Darüber hinaus ist die Steuereinrichtung 34 über Steuerleitungen 40 mit den Ventilen 18, 22, 30 sowie der Pumpe 28 verbunden, um über diese die Wasser-, Sauerstoff- und/oder Wasserstoffzufuhr zu steuern bzw. zu regeln. Darüber hinaus ist die Steuereinrichtung 34 mit einer Zündeinrichtung 42 zum Zünden des Brenners verbunden.

Über die Steuereinrichtung 34 wird der Regenerationsprozess und die Dampferzeugung gestartet. Hierzu werden die Wasserdampf- und Sauerstoffventile 18 und 22 geöffnet und erforderliche Wasserstoff- und Sauerstoffmengen dem Brenner 14 zugeführt, welcher über die Zündeinrichtung 42 gezündet wird. In Abhängigkeit der Signale des Sensors 38 wird dann der Wasserdampferzeugungsprozess durch Betätigung der Ventile geregelt. Die Sicherheitseinrichtung 24 stellt sicher, dass beim Erlöschen des Brenners 14 die Wasserstoff- und Sauerstoffzufuhr unterbrochen wird. Die Steuereinrichtung 34 kann über geeignete Schnittstellen mit weiteren Steuer- bzw. Regelungs- oder Automatisierungsanlagen des Unterseebootes verbunden sein, um z.B. zum gewünschten Zeitpunkt den Regenerationsprozess der CO₂-Bindeeinrichtung starten zu können.

### Bezugszeichenliste

- 2: - Filter
- 4: - Belasteter Luftstrom
- 6: - Gereinigter Luftstrom
- 8: - Dampferzeuger
- 10: - Wasserdampf
- 12: - CO₂-Strom
- 14: - Brenner
- 16: - Wasserstoffleitung
- 18: - Wasserstoffregelventil
- 20: - Sauerstoffleitung
- 22: - Sauerstoffregelventil
- 24: - Sicherheitseinrichtung
- 26: - Befeuchtungseinrichtung
- 28: - Pumpe
- 30: - Wasserventil
- 32: - Wasserleitung
- 34: - Steuereinrichtung
- 36: - Sensorleitung
- 38: - Sensor
- 40: - Steuerleitungen
- 42: - Zündeinrichtung

## Patentansprüche

1. Unterseeboot mit einer CO₂-Bindeeinrichtung (2) zum Binden des in der Luft im Inneren des Unterseebootes enthaltenen CO₂, wobei die CO₂-Bindeeinrichtung ein CO₂-Bindemittel aufweist, welches mittels Wasserdampf regenerierbar ist, und
einen Dampferzeuger (8) zum Erzeugen des Wasserdampfes aufweist, **dadurch gekennzeichnet dass** der Dampferzeuger zur Verbrennung von Wasserstoff mit Sauerstoff ausgebildet ist.

2. Unterseeboot nach Anspruch 1, bei welchem der Dampferzeuger (8) und die CO₂-Bindeeinrichtung derart ausgebildet sind, dass der bei der Verbrennung von Wasserstoff mit Sauerstoff gebildete Wasserdampf der CO₂-Bindeeinrichtung zu deren Regeneration zuführbar ist.

3. Unterseeboot nach Anspruch 1 oder 2, welches mit einer Brennstoffzellenanlage ausgerüstet ist.

4. Unterseeboot nach einem der vorangehenden Ansprüche, bei welchem in dem Dampferzeuger (8) eine Verdampfereinrichtung (26) vorgesehen ist, in welcher Wasser mittels der durch Verbrennung von Wasserstoff und Sauerstoff erzeugten Wärme verdampft wird.

5. Unterseeboot nach einem der vorangehenden Ansprüche, bei welchem das CO₂-Bindemittel ein Festamin ist.

6. Unterseeboot nach einem der Ansprüche 1 bis 4, bei welchem das Bindemittel so beschaffen ist, dass neben CO₂ weitere gasförmige Schadstoffe aus der Raumluft gebunden werden.

## Claims

1. Submarine with a CO₂ binding unit (2) for binding the CO₂ present in the air in the interior of the submarine, where the CO₂ binding unit includes a CO₂ binder regeneratable by means of water vapour, and includes a vapour generator (8) for generation of the water vapour, **characterized in that** the vapour generator is designed for combustion of hydrogen with oxygen.

2. Submarine according to Claim 1, in which the vapour generator (8) and the CO₂ binding unit are designed such that the water vapour formed in the combustion of hydrogen with oxygen can be fed to the CO₂ binding unit for regeneration thereof.

3. Submarine according to Claim 1 or 2, equipped with a fuel cell system.

4. Submarine according to any of the preceding claims, in which, in an evaporator unit (26) that has been provided in the vapour generator (8), water is evaporated by means of the heat generated by combustion of hydrogen and oxygen.

5. Submarine according to any of the preceding claims, in which the CO₂ binder is a solid amine.

6. Submarine according to any of Claims 1 to 4, in which the properties of the binder are such as to bind not only CO₂ but also further gaseous pollutants from the ambient air.

## Revendications

1. Sous-marin présentant un dispositif (2) de séquestration du CO₂ qui séquestre le CO₂ contenu dans l'air présent à l'intérieur du sous-marin, le dispositif de séquestration du CO₂ présentant un ligand de CO₂ qui peut être régénéré au moyen de vapeur d'eau et
un générateur (8) de vapeur qui génère de la vapeur d'eau, **caractérisé en ce que** le générateur de vapeur est configuré pour brûler de l'hydrogène à l'aide d'oxygène.

2. Sous-marin selon la revendication 1, dans lequel le générateur (8) de vapeur et le dispositif de séquestration du CO₂ sont configurés de telle sorte que la vapeur d'eau du dispositif de séquestration du CO₂ formée lors de la combustion d'hydrogène avec l'oxygène peut être amenée à sa régénération.

3. Sous-marin selon les revendications 1 ou 2, équipé d'une installation de cellule à combustible.

4. Sous-marin selon l'une des revendications précédentes, dans lequel un dispositif d'évaporateur (26) dans lequel de l'eau peut être évaporée au moyen de la chaleur produite par combustion d'hydrogène et d'oxygène est prévue dans le générateur (8) de vapeur.

5. Sous-marin selon l'une des revendications précédentes, dans lequel le ligand de CO₂ est une amine solide.

6. Sous-marin selon l'une des revendications 1 à 4, dans lequel le ligand est constitué de telle sorte qu'en plus de CO₂, il séquestre d'autres substances gazeuses toxiques présentes dans l'air ambiant.
